# DEMANDE DE BREVET EUROPEEN

(11) **EP 1 501 325 A1**
(43) Date de publication de la demande: **26.01.2005**
(21) Numéro de dépôt: 04016164.8
(22) Date de dépôt: 09.07.2004
(51) Int. Cl.: H04Q 7/36, H04B 7/26

(54) **Procédé d'accès à des ressources d'un système de radiocommunication, terminal mobile et station de base pour la mise ne oeuvre du procédé**

(30) Priorité: 23.07.2003 FR 0308985
(71) Demandeur: Nortel Networks Limited, St. Laurent, Quebec H4S 2A9 (CA)
(72) Inventeur: Lucidarme, Thierry, 78180 Montigny le Bretonneux (FR); Ben Rached, Nidham, 75017 Paris (FR)
(74) Mandataire: Ameline, Jean-Paul

(57) **Abrégé**

L'invention propose notamment un terminal mobile comprenant :
- des moyens pour recevoir des signaux de synchronisation en provenance d'une station de base d'un système de radiocommunication;
- des moyens pour émettre, à destination de la station de base, des demandes d'accès à des ressources de communication, à des instants respectifs calés par rapport à des instants de réception desdits signaux de synchronisation ;
- des moyens pour déterminer un niveau d'éloignement par rapport à la station de base ; et
- des moyens pour anticiper les instants d'émission des demandes d'accès à des ressources de communication, en fonction du niveau d'éloignement déterminé par les moyens pour déterminer un niveau d'éloignement par rapport à la station de base.

## Description

La présente invention concerne l'accès à des ressources d'un système de radiocommunication. Elle concerne plus particulièrement l'accès aux ressources par des terminaux mobiles distants des stations de base du système de radiocommunication.

Dans de tels systèmes de radiocommunication, comme par exemple dans le système UMTS ("Universal Mobile Telecommunication System"), des terminaux mobiles sont agencés pour communiquer avec le réseau par l'intermédiaire d'au moins une station de base.

Chaque station de base possède une zone de couverture radio à l'intérieur de laquelle elle peut échanger des signaux radio avec des terminaux. La taille d'une zone de couverture dépend de plusieurs paramètres, comme par exemple la puissance d'émission de la station de base concernée. En effet, en deçà d'une certaine puissance d'émission, les signaux transmis à un terminal radio seront reçus trop faiblement pour que celui-ci soit capable de les décoder. Il en est d'ailleurs de même sur la voie montante : la puissance maximale d'émission des terminaux peut représenter un facteur limitant pour la taille de la zone où le service de communication est possible.

Toutefois, d'autres contraintes existent dans de tels systèmes. Certaines d'entre elles peuvent s'avérer particulièrement limitantes, si bien qu'elles imposent la délimitation la plus stricte aux zones de couverture.

Dans le système UMTS par exemple, la contrainte la plus forte est imposée par la procédure d'accès. Chaque station de base possède en effet des fenêtres de réception à l'intérieur desquelles elle peut détecter des demandes d'accès émises par des terminaux dans des plages d'instants d'émission correspondantes. Une demande d'accès reçue par une station de base entre deux fenêtres de réception successives ne sera pas correctement détectée par la station de base.

Une demande d'accès se caractérise dans un premier temps par la transmission d'un préambule de 4096 chips (unités élémentaires pour la transmission d'informations binaires) par un terminal mobile. Or, une fenêtre de réception pour un tel préambule, correspondant à un "slot" du canal d'accès aléatoire PRACH ("Physical Random Access CHannel"), possède 5120 chips. Il existe donc 1024 (= 5120-4096) positions possibles pour la réception d'un préambule. La station de base effectue ainsi des calculs de corrélations pour l'ensemble de ces 1024 positions, afin de détecter la présence éventuelle d'une demande d'accès à l'intérieur d'une fenêtre de réception.

Compte tenu de ce qui précède, on peut démontrer que la distance maximale à laquelle un terminal mobile doit se trouver par rapport à une station de base, pour que le préambule qu'il émet soit reçu par la station de base dans la fenêtre de réception correspondante est de 40 kilomètres seulement. Au-delà de cette limite, la demande d'accès effectuée par le terminal mobile ne sera probablement pas reçue dans une fenêtre d'émission par la station de base concernée, ce qui empêchera la procédure d'accès de se poursuivre : le terminal mobile ne se verra donc alloué aucune ressource de communication.

Dans certains cas pourtant, il serait particulièrement intéressant de pouvoir étendre la zone de couverture d'une station de base à l'accès pour établir une communication, d'autant que les autres contraintes limitant la zone de couverture, notamment en cours de communication, sont bien moins restrictives. Une extension de la couverture peut s'avérer extrêmement utile en particulier dans les zones maritimes à faible proximité des côtes, par exemple pour établir un appel d'urgence.

Un but de la présente invention est de pallier les limitations de la technique actuelle, en permettant une augmentation de la taille de la zone de couverture des stations de base à l'accès.

Un autre but de la présente invention est de permettre l'accès au réseau de terminaux mobiles distants des stations de base du réseau de radiocommunication, dans certains cas où cela s'avère nécessaire, par exemple pour établir des appels d'urgence.

L'invention propose ainsi un procédé d'accès à des ressources d'un système de radiocommunication comprenant au moins une station de base, depuis un terminal mobile, le terminal mobile étant agencé pour émettre des demandes d'accès à la station de base à des instants d'émission respectifs, la station de base étant agencée pour détecter des demandes d'accès du terminal mobile dans des fenêtres de réception, chaque fenêtre de réception étant prévue pour détecter des demandes d'accès émises dans une plage d'instants d'émission correspondante par un terminal mobile situé à une distance de la station de base inférieure à un seuil, la fenêtre de réception suivant la plage d'instants d'émission correspondante d'un intervalle de temps de référence. Le procédé comprend les étapes suivantes :
/a/ déterminer un niveau d'éloignement du terminal mobile par rapport à la station de base ;
/b/ de façon conditionnelle, en fonction du niveau d'éloignement déterminé entre le terminal mobile et la station de base, utiliser un intervalle de temps supérieur à l'intervalle de référence, entre les fenêtres de réception et les plages d'instants d'émission correspondantes des demandes d'accès par ledit terminal mobile, de façon à ce que la station de base puisse détecter une demande d'accès émise par ledit terminal mobile, dans une fenêtre de réception suivant, dudit intervalle de temps, la plage correspondante pour l'instant d'émission de la demande d'accès.

Ainsi, l'intervalle de temps utilisé entre les fenêtres de réception et les plages d'instants d'émission correspondantes des demandes d'accès peut être adapté en fonction du niveau d'éloignement entre le terminal mobile de la station de base. Le niveau d'éloignement considéré peut correspondre à différents critères : il peut par exemple correspondre au fait que le terminal soit éloigné de la station de base d'une distance inférieure ou supérieure à un seuil de distance, ou bien il peut prendre en compte une estimation de la distance qui sépare le terminal de la station de base.

Si la distance séparant le terminal de la station de base est supérieure au seuil, alors l'intervalle de temps utilisé sera avantageusement supérieur à l'intervalle de référence, de manière à permettre à la station de base de détecter la demande d'accès du terminal, malgré le temps nécessaire aux signaux radio portant la demande d'accès d'arriver jusqu'à la station de base.

Le procédé comprend deux modes de réalisation alternatifs. Selon le premier mode de réalisation, l'utilisation d'un intervalle de temps supérieur à l'intervalle de référence, entre les fenêtres de réception et les plages d'instants d'émission correspondantes des demandes d'accès par ledit terminal mobile, comprend une anticipation des plages d'instants d'émission des demandes d'accès par ledit terminal mobile. Dans ce cas, c'est donc le terminal mobile qui compense le temps d'acheminement supplémentaire introduit par l'éloignement entre le terminal et la station de base. Pour la station de base, tout se passe comme si la distance qui la sépare du terminal mobile était inférieure au seuil, du fait de l'anticipation des demandes d'accès par le terminal mobile.

Dans le second mode de réalisation du procédé, les demandes d'accès sont émises par le terminal mobile avec une signature donnée parmi un ensemble de signatures possibles, exclusivement lorsque le terminal mobile est considéré comme éloigné de la station de base d'une distance supérieure audit seuil. Et l'utilisation d'un intervalle de temps supérieur à l'intervalle de référence, entre les fenêtres de réception et les plages d'instants d'émission correspondantes des demandes d'accès par ledit terminal mobile, comprend un décalage dans le temps des fenêtres de réception pour détecter les demandes d'accès émises avec ladite signature donnée. Ainsi, la station de base possède des fenêtres de réception décalée avec un certain retard par rapport aux fenêtres de réception classiques, pour y détecter des demandes d'accès transmises par des terminaux éloignés et utilisant une signature particulière prédéterminée.

L'invention propose également un terminal mobile conforme au premier mode de réalisation du procédé et comprenant :
- des moyens pour recevoir des signaux de synchronisation en provenance d'une station de base d'un système de radiocommunication;
- des moyens pour émettre, à destination de la station de base, des demandes d'accès à des ressources de communication, à des instants respectifs calés par rapport à des instants de réception desdits signaux de synchronisation ;
- des moyens pour déterminer un niveau d'éloignement par rapport à la station de base ; et
- des moyens pour anticiper les instants d'émission des demandes d'accès à des ressources de communication, en fonction du niveau d'éloignement déterminé par les moyens pour déterminer un niveau d'éloignement par rapport à la station de base.

L'invention propose également un terminal mobile conforme au second mode de réalisation du procédé et comprenant :
- des moyens pour recevoir des signaux de synchronisation en provenance d'une station de base d'un système de radiocommunication;
- des moyens pour émettre, à destination de la station de base, des demandes d'accès à des ressources de communication, à des instants respectifs calés par rapport à des instants de réception desdits signaux de synchronisation, les demandes d'accès comprenant une signature parmi un ensemble de signatures possibles ;
- des moyens pour déterminer un niveau d'éloignement par rapport à la station de base.

Le terminal mobile comprend en outre :
- des moyens pour choisir une signature parmi l'ensemble de signatures possibles pour émettre des demandes d'accès comprenant ladite signature, en fonction du niveau d'éloignement déterminé par les moyens pour déterminer un niveau d'éloignement par rapport à la station de base.

L'invention propose en outre une station de base d'un système de radiocommunication, conforme au second mode de réalisation du procédé, et comprenant :
- des moyens pour émettre des signaux de synchronisation à destination de terminaux mobiles;
- des moyens pour détecter des demandes d'accès émises par des terminaux mobiles, dans des fenêtres de réception appartenant à un ensemble parmi au moins un premier et un second ensembles de fenêtres de réception, les demandes d'accès comprenant une signature parmi un ensemble de signatures possibles.
Les fenêtres de réception du premier ensemble sont calées par rapport à des instants d'émission respectifs des signaux de synchronisation, et les fenêtres de réception du second ensemble sont décalées dans le temps avec un retard par rapport aux fenêtres de réception du premier ensemble. Les moyens pour détecter des demandes d'accès émises par des terminaux mobiles comprennent des moyens pour détecter des demandes d'accès comprenant au moins une signature donnée parmi l'ensemble signatures possibles dans les fenêtres de réception du second ensemble, et des moyens pour détecter des demandes d'accès comprenant une signature autre que ladite signature donnée dans les fenêtres de réception du premier ensemble.

Dans une réalisation avantageuse de l'invention, les modifications de l'intervalle de temps séparant les fenêtres de réception des plages d'instants d'émission correspondantes des demandes d'accès ne sont effectuées que lorsque ces demandes d'accès visent à établir un appel d'urgence.

D'autres particularités et avantages de la présente invention apparaîtront dans la description ci-après d'exemples de réalisation non limitatifs, en référence aux dessins annexés, dans lesquels :
- la figure 1 est une représentation schématique du déroulement dans le temps du début d'une procédure d'accès ;
- la figure 2 est un organigramme schématisant les étapes d'une méthode d'évaluation de la distance entre un terminal mobile et une station de base selon un mode de réalisation de l'invention.

On se place ci-après dans le cadre du système de radiocommunication UMTS sans pour autant restreindre la portée de l'invention, applicable à d'autres systèmes.

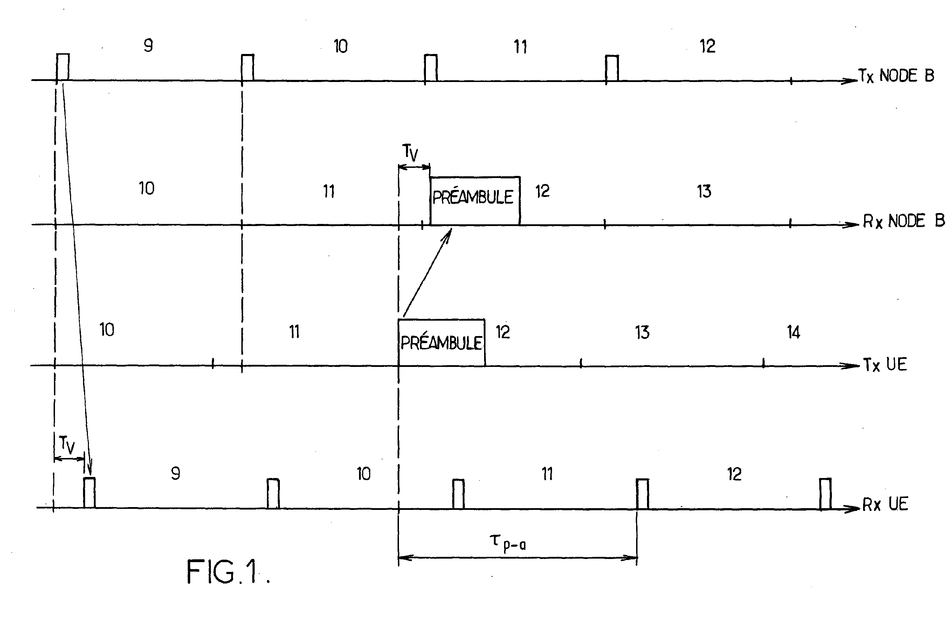

La procédure d'accès consiste tout d'abord pour un terminal mobile, appelé UE ("User Element"), à transmettre au réseau, sur un canal PRACH montant, un préambule. Ce message est envoyé au début d'un intervalle de temps ou "slot" de 1,33 ms, comme illustré par exemple sur la figure 1, où le préambule est émis sur le PRACH dès le début du slot 12 par l'UE.

Le préambule comporte 4096 chips et consiste en 256 répétitions d'un code appelé signature, de 16 chips de longueur, choisi parmi un ensemble de 16 signatures disponibles. Les signatures sont des codes d'Hadamard. La formulation de ces codes peut être trouvée à la section 4.3.3 de la spécification technique TS 25.213, version 3.7.0, publiée en décembre 2001 par le 3GPP. Un UE connaît les signatures ainsi que les slots du canal PRACH qu'il peut utiliser pour demander un accès à un Node B, car ces informations sont diffusées par le Node B sur le canal de synchronisation SCH ("Synchronisation CHannel").

Si l'on se place du côté du réseau de radiocommunication, chaque station de base du système, ou Node B selon la terminologie utilisée dans le système UMTS, cherche à détecter si un tel préambule a été reçu depuis un UE. Pour cela, elle effectue, comme indiqué en introduction et de façon connue en soi, des calculs de corrélation entre les signaux qu'elle détecte et les séquences de préambules possibles, pour les différentes positions de réception à l'intérieur d'une fenêtre de réception correspondant à un slot du canal PRACH (5120 chips). La réception d'une demande d'accès est détectée lorsque les calculs de corrélation du Node B indiquent qu'une séquence numérique reçue est celle d'un préambule émis sur le PRACH, avec un certain niveau de probabilité.

Si un Node B détecte la réception d'un préambule, il répond à la demande d'accès de l'UE, en lui transmettant un acquittement positif sur le canal descendant AICH (« Acquisition Indicator Channel »). Cet acquittement présente une structure similaire à celle du préambule, puisqu'il utilise un facteur d'étalement égal à 256 et une signature de séquence 16 chips. Dans un exemple de réalisation, un acquittement positif sur le canal AICH utilise une signature identique à la signature de préambule, tandis qu'un acquittement utilisant une signature inversée par rapport à la signature de préambule RACH est négatif.

Le canal AICH est par ailleurs aligné en temps avec le canal descendant de synchronisation SCH, lui-même divisé en 15 slots, et représenté sur la première ligne de la figure 1 (Tx Node B). Les signaux de synchronisation émis en début de chaque slot sur ce canal sont reçus par l'UE, un temps de vol (Tv) après leur émission par le Node B.

Il existe par ailleurs, conformément à la spécification technique 25.211, version 5.4.0, "Physical channels and mapping of transport channels onto physical channels (FDD)", publiée en juin 2003 par l'organisation 3GPP (3rd Generation Partnership Project), un décalage temporel de τₚ₋ₐ (= 7860) chips entre la transmission des demandes d'accès aléatoires sur le canal PRACH et la réception par l'UE des acquittements sur le canal AICH. Ce décalage permet de positionner les slots d'émission du canal PRACH par rapport aux signaux de synchronisation émis sur le canal SCH, comme cela a été représenté sur la figure 1.

Sur la figure 1, le Node B reçoit le préambule transmis dans le slot 12 du PRACH par l'UE (ligne Tx UE), dans une fenêtre de réception correspondant au slot 12 du canal PRACH (ligne Rx Node B). Dans l'exemple illustré le temps de vol (Tv) entre l'UE et le Node B est suffisamment faible pour que le préambule transmis par l'UE soit reçu par le Node B à l'intérieur de la fenêtre de réception correspondante. Autrement dit, l'UE est situé à une distance inférieure à 40 km du Node B. De ce fait, le Node B sera en mesure de détecter la réception de ce préambule, et par suite de transmettre un acquittement à l'UE demandant l'accès.

Si la distance séparant l'UE du Node B considéré est supérieure à 40 km, le temps de vol sera trop long pour permettre au préambule transmis par l'UE dans un slot du PRACH d'être reçu par le Node B à l'intérieur de la fenêtre de réception correspondant à ce slot. Par exemple, sur la figure 1, le préambule pourrait être reçu entre les fenêtres de réception numérotées 12 et 13. Par suite, aucun préambule ne serait détecté par le Node B, puisque cette détection est effectuée sur chaque fenêtre de réception uniquement. En effet, une détection de préambule sur une période correspondant à plus d'une fenêtre de réception, par exemple à deux fenêtres de réception consécutives, n'est pas souhaitable car elle augmenterait le nombre de positions possibles pour la réception d'un préambule à l'intérieur de cette période, ce qui entraînerait une augmentation considérable du nombre de calculs de corrélations à effectuer par le Node B.

Considérons qu'un intervalle de temps de référence (qui dépend du temps de vol entre l'UE et le Node B, d'après ce qui précède) sépare les slots d'émission du préambule par l'UE des fenêtres de réception de ce même préambule par le Node B. Selon l'invention, cet intervalle peut être modifié pour obtenir un intervalle de temps supérieur à l'intervalle de référence de façon conditionnelle, en particulier lorsque l'UE est distant du Node B considéré, c'est-à-dire dans le cas particulier du système UMTS, lorsque l'UE est situé à plus de 40 km du Node B. Pour modifier cet intervalle de temps, on peut jouer sur les instants d'émission des préambules ou sur les instants de réception de ces préambules.

Dans un premier mode de réalisation, l'augmentation de l'intervalle de temps résulte d'une anticipation de l'émission du préambule par un UE distant du Node B. Par exemple, lorsque la transmission du préambule par l'UE dans le slot 12 se traduirait normalement par une réception du préambule entre les fenêtres de réception 12 et 13 au niveau du Node B, le terminal transmettra en réalité le préambule avec une avance Ta par rapport au début du slot 12. De ce fait, le préambule sera bien reçu par le Node B à l'intérieur de sa fenêtre de réception 12. Si l'on souhaite par exemple pouvoir détecter les demandes d'accès émises par des terminaux mobiles situés à une distance du Node B comprise entre 40 et 80 km, on choisira de préférence Ta de façon à ce que l'anticipation corresponde à 1024 chips.

Dans ce mode de réalisation, seul l'UE est conscient de son éloignement par rapport au Node B, tandis que pour ce dernier, tout se passe comme si l'UE était à moins de 40 km (puisque vu du Node B, le préambule est normalement reçu dans une fenêtre de réception). Par la suite, l'UE décalera ses fenêtres d'émission et de réception de la valeur de Ta, de manière à toujours compenser le délai introduit par la distance supplémentaire à parcourir pour les signaux qu'il transmet et reçoit. Les fenêtres d'émission de l'UE seront avancées dans le temps de Ta, tandis que les fenêtres de réception de l'UE seront décalées avec un retard de Ta. Aucune modification des fenêtres d'émission et de réception n'est nécessaire au niveau du Node B dans ce cas.

Selon un second mode de réalisation, l'intervalle de temps entre les slots d'émission et les fenêtres de réception des préambules d'accès est supérieur à l'intervalle de temps de référence, du fait du décalage dans le temps de certaines fenêtres de réception au niveau du Node B. De façon avantageuse, les fenêtres de réception ainsi décalées dans le temps de façon permanente correspondent à des fenêtres de réception dans lesquelles le Node B tente de détecter des préambules utilisant une ou des signatures particulières parmi les différentes signatures possibles. En effet, dans ce mode de réalisation, une ou plusieurs signatures sont exclusivement utilisées pour coder les préambules émanant d'UE distants du Node B de plus de 40 km.

On a donc au niveau du Node B, plusieurs ensembles de fenêtres de réception qui cohabitent. Un ensemble de fenêtres de réception est positionné dans le temps de façon classique, c'est-à-dire en respectant l'intervalle de temps de référence par rapport à l'émission des préambules sur le PRACH. Cet ensemble permet au Node B de détecter les préambules émis par des UE proches du Node B avec une signature non réservée. Un autre ensemble de fenêtres de réception est décalé dans le temps par rapport au premier ensemble de fenêtres et sert à détecter exclusivement les préambules contenant une signature réservée aux demandes d'accès effectuées par des UE éloignés du Node B.

Le Node B recevant, dans une fenêtre décalée en temps de manière à compenser l'augmentation du temps de vol pour les terminaux distants, un préambule contenant une signature réservée, interprétera correctement la réception du préambule. Le temps de vol considéré par le Node B sera le temps de vol réel, c'est-à-dire le temps de vol apparent (Tv) augmenté de la valeur du décalage temporel utilisé pour cette fenêtre. Par la suite, les signaux sont échangés entre l'UE et le Node B en tenant compte de ce temps de vol réel.

Il est possible de prévoir un plus grand nombre d'ensembles de fenêtres de réception pour détecter des préambules émis par des UE plus ou moins éloignés et comprenant des signatures réservées respectives. Ces ensembles de fenêtres de réception ont des décalages temporels différents entre eux pour permettre la détection de demandes d'accès par des UE plus ou moins éloignés du Node B. A titre d'exemple, un UE distant de 40 à 80 km d'un Node B utilisera une première signature réservée, tandis qu'un UE distant de plus de 80 km du Node B utilisera une seconde signature réservée. Les fenêtres de réception sur lesquelles les préambules utilisant la première signature sont détectés sont décalées de 1024 chips dans le temps par rapport aux fenêtres de réception classiques, et celles pour la réception des préambules utilisant la seconde signature ont un décalage de 2048 chips. En fonction de la fenêtre sur laquelle le Node B détecte un préambule et en fonction de la signature utilisée pour ce préambule, le Node B disposera alors d'une approximation de l'éloignement de l'UE demandant l'accès. Cela suppose néanmoins une connaissance assez précise de la distance qui sépare l'UE du Node B, qui peut être acquise par exemple selon une des méthodes décrites plus bas.

Dans un mode de réalisation avantageux, le choix d'un intervalle de temps entre les slots d'émission et de réception des demandes d'accès est effectué de façon conditionnelle, selon d'autres critères, en plus de la distance séparant l'UE du Node B.

En particulier, on pourra réserver l'accès distant à des UE qui tentent d'établir un appel d'urgence. A cet effet, l'UE considéré peut anticiper son émission du préambule selon le premier mode de réalisation de l'invention décrit, ou bien utiliser une signature réservée aux appels d'urgence distants selon le second mode de réalisation de l'invention, uniquement lorsque la demande d'accès correspond à l'établissement d'un appel d'urgence.

Pour déterminer si un UE est distant d'un Node B, en particulier s'il se trouve à une distance supérieure à 40 km, l'UE dispose de divers moyens, selon la précision recherchée.

Il peut par exemple déduire son éloignement de l'analyse de certains paramètres. En particulier, l'UE peut calculer la puissance de réception des signaux qu'il reçoit du Node B, de façon connue en soi. Ainsi, un signal reçu avec une puissance faible pourra être interprété par l'UE comme émanant d'un Node B situé à grande distance de lui. Un profil de propagation peut également être établi de façon également connue en soi. L'analyse de ce profil de propagation par l'UE conduit alors à déterminer un éloignement par rapport au Node B. Par exemple, si l'analyse du profil de propagation révèle la présence d'un nombre réduit de trajets de propagation, les trajets présentant des retards importants, cela peut être interprété comme le signe d'une grande distance entre l'UE et le Node B. Les différents paramètres susmentionnés seront avantageusement calculés à partir de l'estimation des données reçues sur le canal physique commun CPICH ("Common Pilot CHannel") émis par le Node B et comprenant une suite de symboles connue de l'UE.

Si les signaux de plusieurs Nodes B sont reçus par l'UE, ce dernier peut avantageusement combiner des paramètres issus de ces différents Nodes B. Par exemple, si l'UE reçoit un signal de très faible puissance sur chacun des canaux communs émis par les Nodes B, il peut en déduire qu'il se trouve à une distance importante de l'ensemble des Nodes B du réseau. En revanche, si un ou plusieurs signaux sont reçus à forte puissance depuis certains Nodes B, l'UE sera sans doute proche de ces Nodes B. Un seuil de puissance peut être utilisé pour déterminer si l'éloignement de l'UE par rapport à un Node B est supérieur à 40 km.

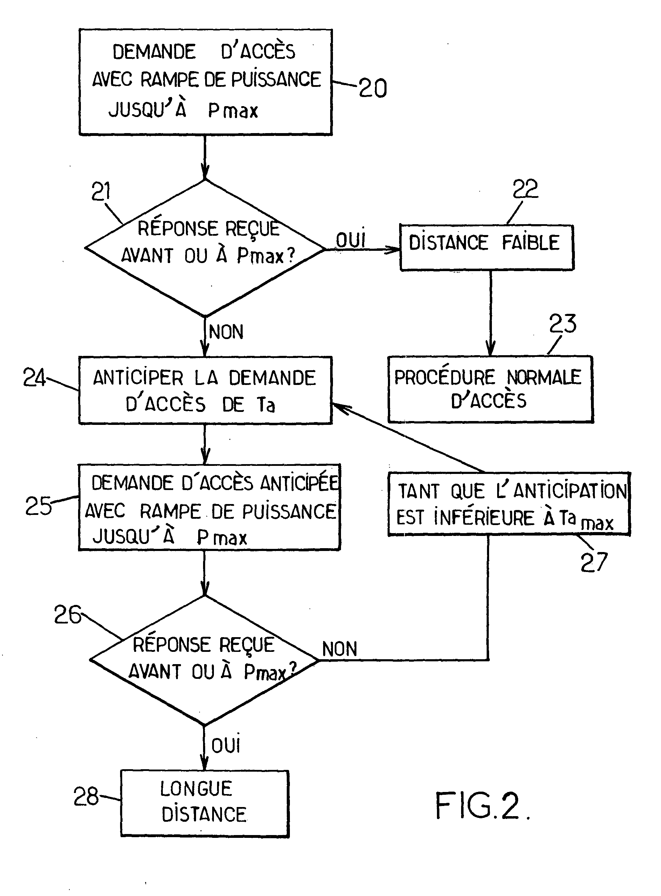

Un autre mode de réalisation, illustré à la figure 2, peut être avantageusement mis en oeuvre pour déterminer l'éloignement entre un UE et un Node B, aux fins de déterminer si la procédure d'accès adaptée aux accès distants, telle que décrite ci-dessus, doit être effectuée ou non.

Selon ce mode de réalisation, l'UE souhaitant accéder au réseau commence par effectuer une demande d'accès classique par la transmission d'un préambule sur le canal PRACH, comme indiqué ci-dessus. Une rampe de puissance peut être utilisée par l'UE pour retransmettre régulièrement le préambule avec, pour chaque nouvelle transmission une puissance d'émission augmentée par rapport à la précédente transmission, tant qu'il n'a pas été répondu à sa demande d'accès (étape 20). Cette méthode permet d'améliorer la détection du préambule par le Node B concerné, notamment dans le cas où la faible puissance d'émission des premières transmissions est à l'origine de l'absence de détection sur le PRACH. Ce processus peut être répété jusqu'à ce que l'UE atteigne une puissance d'émission maximale Pₘₐₓ prédéterminée.

Si une réponse est reçue par l'UE lors de cette étape, c'est-à-dire si l'UE reçoit un acquittement positif sur l'AICH en réponse à la demande émise sur le PRACH avec une puissance inférieure ou égale à Pₘₐₓ, cela signifie que, dans des conditions d'émission normales, le Node B est en mesure de détecter le préambule émis par l'UE. Autrement dit, l'UE est situé à une distance suffisamment faible du Node B, c'est-à-dire typiquement à moins de 40 km du Node B (étape 22). Dans ce cas de figure, la procédure d'accès peut se poursuivre normalement (étape 23), c'est-à-dire que l'UE va transmettre au Node B un message d'accès faisant suite au préambule (voir le paragraphe 5.2.2.1.3 de la spécification technique 25.211 précitée), puis le Node B allouera des ressources de communication à l'UE.

Au contraire, si aucune réponse n'est reçue par l'UE après qu'il a émis un préambule à puissance maximale Pₘₐₓ, voire un ensemble de préambules selon une rampe de puissance jusqu'à Pₘₐₓ, l'UE répète alors sa demande d'accès sur le canal PRACH en anticipant cette demande d'une valeur d'une avance Ta, par rapport au début du slot d'émission sur le PRACH, tel que déterminé en cohérence avec la synchronisation prévue par le Node B, comme décrit plus haut (étape 24). Cette nouvelle transmission de préambule peut être faite directement à puissance maximale Pₘₐₓ ou bien à puissance réduite, puis répétée avec une puissance accrue selon une rampe de puissance, éventuellement jusqu'à atteindre Pₘₐₓ comme dans le cas précédent.

L'avance en temps Ta utilisée pour anticiper la nouvelle demande d'accès dépend de la précision que l'on souhaite avoir sur la distance séparant l'UE du Node B. Dans un mode de réalisation avantageux, Ta correspond à une avance de 1024 chips, si bien que la nouvelle demande d'accès sera détectée par le Node B, si l'UE est entre 40 et 80 km du Node B considéré.

Si une réponse à la nouvelle demande est reçue par l'UE depuis le Node B (étape 26), sous la forme d'un acquittement positif par exemple, cela signifie que la séquence numérique du préambule a bien été détectée par le Node B dans une de ses fenêtres de réception. Le temps de vol entre l'UE et le Node B est donc tel que le préambule émis avec une anticipation de Ta sera reçu dans une fenêtre de réception du Node B, c'est-à-dire que l'UE est bien situé dans la gamme de distances associée à l'anticipation de Ta, soit par exemple 40-80 km pour une anticipation des slots d'émission de 1024 chips. A la réception de l'acquittement, l'UE pourra alors se considérer comme distant du Node B dans une plage de distances en cohérence avec l'anticipation Ta (étape 28).

Au contraire, dans le cas où aucune réponse n'est reçue à la demande d'accès anticipée de l'UE, même avec une puissance d'émission maximale Pₘₐₓ, l'anticipation peut être augmentée une nouvelle fois de la valeur Ta, pour couvrir une plage de distances plus élevées que dans le cas précédent (étape 24). Une nouvelle demande d'accès sera à nouveau effectuée par l'UE, mais avec une anticipation de 2.Ta.

Après un nombre n de répétitions des étapes 24 et 27 de l'organigramme illustré sur la figure 2, c'est-à-dire après un nombre n d'anticipations réalisées pour les slots d'émission du préambule, sans que l'UE n'ait reçu d'acquittement de la part du Node B, l'avance en temps atteint la valeur de n.Ta.

Tant que n.Ta a une valeur inférieure à une valeur d'anticipation maximale Ta ₘₐₓ, une nouvelle anticipation peut être effectuée pour une nouvelle demande d'accès par l'UE, conformément à ce qui est décrit plus haut. Lorsque la valeur Ta ₘₐₓ est atteinte, la procédure d'accès est stoppée. De façon avantageuse Ta ₘₐₓ correspond à une anticipation des slots d'émission du PRACH d'une valeur inférieure à 5120 chips, de manière à ne pas aboutir à une situation où la fenêtre de réception ainsi anticipée se substitue à la fenêtre de réception qui la précède en temps normal. Par exemple, Ta ₘₐₓ peut correspondre à une anticipation de 4096 (= 5120-1024) chips, ce qui permet de couvrir la plage de distances 160-200 km. Il est bien sûr possible de fixer une anticipation maximale plus faible. Un tel procédé, peut alors permettre, après un certain nombre de répétitions du préambule régulièrement anticipées d'une avance de Ta, de détecter une demande d'accès émise par un UE se situant dans un rayon de 200 km du Node B.

D'autres variantes de ce mode de détermination de la distance sont aussi possibles, par exemple en n'anticipant pas chaque nouvelle demande d'accès de la même valeur Ta d'anticipation, ou bien en ne couvrant que certaines plages déterminées de distances.

A l'issue des étapes précédentes, l'UE anticipera ses fenêtres d'émission pour ses demandes d'accès sur le canal PRACH de la valeur n.Ta, puis il anticipera ses fenêtres d'émission et introduira un retard dans ses fenêtres de réception de la même valeur n.Ta pour ses échanges de trafic ou de données avec le Node B, selon un mode de réalisation de l'invention. Selon le mode de réalisation alternatif de l'invention, l'UE utilisera une signature particulière pour son préambule, de manière à ce qu'il soit reçu au Node B dans une fenêtre de réception décalée dans le temps de n.Ta par rapport aux fenêtres de réception classiques.

La connaissance des anticipations ou des décalages de fenêtres permet ainsi d'assurer un établissement et un maintien corrects de canaux dédiés pour la transmission de trafic voix ou de données.

Selon un mode de réalisation avantageux, après avoir acquis une connaissance approximative de la distance qui le sépare du Node B, par exemple grâce au procédé illustré sur la figure 2, l'UE transmet au Node B une indication relative à cette approximation de la distance. Ceci peut être réalisé en transmettant au Node B, le nombre n de boucles effectuées dans le procédé ci-dessus, dans le message d'accès qui suit la réception d'un acquittement positif par l'UE. Cette indication pourra alors être exploitée par le réseau, par exemple à des fins de localisation de l'UE.

Lorsque l'UE considéré dispose lui-même de moyens de localisation, par exemple un récepteur basé sur le système de positionnement par satellites GPS ("Global Positioning System"), il peut avantageusement transmettre l'évaluation qu'il a faite de sa position au Node B. Cette transmission peut être effectuée par exemple en insérant l'évaluation de la position de l'UE dans le message transmis sur le canal d'accès aléatoire PRACH, à la suite de l'acquittement du préambule d'accès.

## Revendications

1. Procédé d'accès à des ressources d'un système de radiocommunication comprenant au moins une station de base, depuis un terminal mobile, le terminal mobile étant agencé pour émettre des demandes d'accès à la station de base à des instants d'émission respectifs, la station de base étant agencée pour détecter des demandes d'accès du terminal mobile dans des fenêtres de réception, chaque fenêtre de réception étant prévue pour détecter des demandes d'accès émises dans une plage d'instants d'émission correspondante par un terminal mobile situé à une distance de la station de base inférieure à un seuil, la fenêtre de réception suivant la plage d'instants d'émission correspondante d'un intervalle de temps de référence, le procédé comprenant les étapes suivantes :
/a/ déterminer un niveau d'éloignement du terminal mobile par rapport à la station de base ;
/b/ de façon conditionnelle, en fonction du niveau d'éloignement déterminé entre le terminal mobile et la station de base, utiliser un intervalle de temps supérieur à l'intervalle de référence, entre les fenêtres de réception et les plages d'instants d'émission correspondantes des demandes d'accès par ledit terminal mobile, de façon à ce que la station de base puisse détecter une demande d'accès émise par ledit terminal mobile, dans une fenêtre de réception suivant, dudit intervalle de temps, la plage correspondante pour l'instant d'émission de la demande d'accès.

2. Procédé selon la revendication 1, dans lequel l'étape /b/ est réalisée lorsque la détermination du niveau d'éloignement du terminal mobile par rapport à la station de base indique que le terminal mobile est situé à une distance de la station de base supérieure audit seuil.

3. Procédé selon la revendication 1 ou 2, dans lequel l'utilisation d'un intervalle de temps supérieur à l'intervalle de référence, entre les fenêtres de réception et les plages d'instants d'émission correspondantes des demandes d'accès par ledit terminal mobile, comprend une anticipation des plages d'instants d'émission des demandes d'accès par ledit terminal mobile.

4. Procédé selon la revendication 1 ou 2, dans lequel les demandes d'accès sont émises par le terminal mobile avec une signature donnée parmi un ensemble de signatures possibles, exclusivement lorsque le terminal mobile est considéré comme éloigné de la station de base d'une distance supérieure audit seuil, et dans lequel l'utilisation d'un intervalle de temps supérieur à l'intervalle de référence, entre les fenêtres de réception et les plages d'instants d'émission correspondantes des demandes d'accès par ledit terminal mobile, comprend un décalage dans le temps des fenêtres de réception pour détecter les demandes d'accès émises avec ladite signature donnée.

5. Procédé selon l'une quelconque des revendications précédentes, dans lequel ledit intervalle de temps utilisé entre les fenêtres de réception et les plages d'instants d'émission correspondantes des demandes d'accès par ledit terminal mobile, dépend de la distance entre le terminal mobile et la station de base.

6. Procédé selon l'une quelconque des revendications précédentes, dans lequel ledit intervalle de temps utilisé entre les fenêtres de réception et les plages d'instants d'émission correspondantes des demandes d'accès par ledit terminal mobile, est supérieur à l'intervalle de temps de référence d'une valeur plus faible que la durée d'une fenêtre de réception.

7. Procédé selon l'une quelconque des revendications précédentes, dans lequel la détermination du niveau d'éloignement du terminal mobile par rapport à la station de base comprend une estimation par le terminal mobile d'un paramètre au moins parmi : un niveau de puissance d'un signal reçu depuis la station de base, un profil de propagation entre le terminal mobile et la station de base, des retards de propagation entre le terminal mobile et la station de base, un niveau de puissance de signaux reçus respectivement d'un ensemble de stations de base.

8. Procédé selon l'une quelconque des revendications précédentes, dans lequel la détermination du niveau d'éloignement du terminal mobile par rapport à la station de base comprend les étapes suivantes :
/c/ émettre une demande d'accès à un instant d'émission depuis le terminal mobile, de manière à ce qu'elle puisse être détectée par la station de base dans une fenêtre de réception correspondante ;
/d/ si aucune réponse à la demande d'accès n'a été reçue au terminal mobile, répéter l'émission d'une demande d'accès à un instant d'émission anticipé par rapport à la fenêtre de réception correspondante ;
/e/ déduire que le terminal mobile est à une distance de la station de base supérieure audit seuil, si une réponse à la demande d'accès est reçue au terminal mobile à l'issue de l'étape /d/.

9. Procédé selon l'une quelconque des revendications 1 à 7, dans lequel la détermination du niveau d'éloignement du terminal mobile par rapport à la station de base comprend les étapes suivantes :
/f/ émettre une demande d'accès à un instant d'émission depuis le terminal mobile, de manière à ce qu'elle puisse être détectée par la station de base dans une fenêtre de réception correspondante ;
/g/ si aucune réponse à la demande d'accès n'a été reçue au terminal mobile, répéter l'émission d'une demande d'accès à un instant d'émission anticipé par rapport à la fenêtre de réception correspondante ;
/h/ répéter l'étape /g/ en anticipant encore l'instant d'émission par rapport à la fenêtre de réception correspondante, tant qu'aucune réponse à la demande d'accès n'a été reçue au terminal mobile et qu'une anticipation maximale n'a pas été atteinte pour l'instant d'émission de la demande d'accès; et
/i/ déduire une estimation de la distance entre le terminal mobile et la station de base, à partir d'un nombre de répétitions de l'étape /g/ effectuées.

10. Procédé selon l'une quelconque des revendications précédentes, dans lequel l'étape /b/ est réalisée uniquement lorsque la demande d'accès vise à établir un appel d'urgence.

11. Procédé selon l'une quelconque des revendications précédentes, dans lequel le niveau d'éloignement du terminal mobile par rapport à la station de base est déterminé par le terminal mobile et transmis à la station de base en vue d'un traitement ultérieur.

12. Procédé selon l'une quelconque des revendications précédentes, dans lequel le terminal mobile est apte à évaluer sa position géographique, et dans lequel il transmet la position géographique qu'il a évaluée à la station de base dans un message d'accès.

13. Terminal mobile comprenant:
- des moyens pour recevoir des signaux de synchronisation en provenance d'une station de base d'un système de radiocommunication;
- des moyens pour émettre, à destination de la station de base, des demandes d'accès à des ressources de communication, à des instants respectifs calés par rapport à des instants de réception desdits signaux de synchronisation ;
- des moyens pour déterminer un niveau d'éloignement par rapport à la station de base ; et
- des moyens pour anticiper les instants d'émission des demandes d'accès à des ressources de communication, en fonction du niveau d'éloignement déterminé par les moyens pour déterminer un niveau d'éloignement par rapport à la station de base.

14. Terminal mobile selon la revendication 13, dans lequel les moyens pour anticiper les instants d'émission des demandes d'accès à des ressources de communication, anticipent lesdits instants d'émission des demandes d'accès lorsque les moyens pour déterminer un niveau d'éloignement par rapport à la station de base indiquent que le terminal mobile est éloigné de la station de base d'une distance supérieure à un seuil.

15. Terminal mobile selon la revendication 13 ou 14, dans lequel les moyens pour déterminer un niveau d'éloignement par rapport à la station de base comprennent des moyens pour estimer une distance entre le terminal mobile et la station de base, et dans lequel l'anticipation effectuée par les moyens pour anticiper les instants d'émission des demandes d'accès à des ressources de communication, dépend de la distance estimée entre le terminal mobile et la station de base.

16. Terminal mobile selon l'une quelconque des revendications 13 à 15, dans lequel les moyens pour déterminer un niveau d'éloignement par rapport à la station de base comprennent des moyens pour estimer un paramètre au moins parmi : un niveau de puissance d'un signal reçu depuis la station de base, un profil de propagation entre le terminal mobile et la station de base, des retards de propagation entre le terminal mobile et la station de base, un niveau de puissance de signaux reçus respectivement d'un ensemble de stations de base du système de radiocommunication.

17. Terminal mobile selon l'une quelconque des revendications 13 à 16, dans lequel les moyens pour déterminer un niveau d'éloignement par rapport à la station de base comprennent :
- des moyens pour émettre, à destination de la station de base, une demande d'accès à des ressources de communication, à un instant d'émission calé par rapport à un instant respectif de réception d'un signal de synchronisation émis par la station de base ;
- des moyens pour répéter l'émission d'une demande d'accès de façon anticipée, si aucune réponse à la demande d'accès n'a été reçue au terminal mobile ;
- des moyens pour déduire que le terminal mobile est à une distance de la station de base supérieure à un seuil, si une réponse à la demande d'accès est reçue au terminal mobile à l'issue de la répétition de la demande d'accès de façon anticipée.

18. Terminal mobile selon l'une quelconque des revendications 13 à 17, dans lequel les moyens pour déterminer un niveau d'éloignement par rapport à la station de base comprennent :
- des moyens pour émettre, à destination de la station de base, une demande d'accès à des ressources de communication, à un instant d'émission calé par rapport à un instant respectif de réception d'un signal de synchronisation émis par la station de base ;
- des moyens pour répéter l'émission d'une demande d'accès en anticipant à chaque fois l'instant d'émission de la demande d'accès, tant qu'aucune réponse à la demande d'accès n'a été reçue au terminal mobile et qu'une anticipation maximale n'a pas été atteinte ;
- des moyens pour déduire une estimation de la distance entre le terminal mobile et la station de base à partir d'un nombre de répétitions effectuées par lesdits moyens pour répéter l'émission d'une demande d'accès en anticipant à chaque fois l'instant d'émission de la demande d'accès.

19. Terminal mobile selon l'une quelconque des revendications 13 à 18, dans lequel lesdits moyens pour anticiper les instants d'émission des demandes d'accès à des ressources de communication, en fonction du niveau d'éloignement déterminé par les moyens pour déterminer un niveau d'éloignement par rapport à la station de base, sont mis en oeuvre uniquement lorsque les demandes d'accès visent à établir un appel d'urgence.

20. Terminal mobile selon l'une quelconque des revendications 13 à 19, comprenant en outre des moyens pour transmettre à la station de base une information relative au niveau d'éloignement déterminé par les moyens pour déterminer un niveau d'éloignement par rapport à la station de base.

21. Terminal mobile selon l'une quelconque des revendications 13 à 20, comprenant en outre des moyens pour évaluer sa position géographique, et des moyens pour transmettre ladite position géographique à la station de base dans un message d'accès.

22. Terminal mobile comprenant :
- des moyens pour recevoir des signaux de synchronisation en provenance d'une station de base d'un système de radiocommunication;
- des moyens pour émettre, à destination de la station de base, des demandes d'accès à des ressources de communication, à des instants respectifs calés par rapport à des instants de réception desdits signaux de synchronisation, les demandes d'accès comprenant une signature parmi un ensemble de signatures possibles ;
- des moyens pour déterminer un niveau d'éloignement par rapport à la station de base ;
le terminal mobile comprenant en outre :
- des moyens pour choisir une signature parmi l'ensemble de signatures possibles pour émettre des demandes d'accès comprenant ladite signature, en fonction du niveau d'éloignement déterminé par les moyens pour déterminer un niveau d'éloignement par rapport à la station de base.

23. Terminal mobile selon la revendication 22, dans lequel les moyens pour déterminer un niveau d'éloignement par rapport à la station de base comprennent des moyens pour déterminer si le terminal mobile est éloigné de la station de base d'une distance supérieure à un seuil, et dans lequel les moyens pour choisir une signature parmi l'ensemble de signatures possibles comprennent des moyens pour choisir une signature donnée pour émettre des demandes d'accès comprenant ladite signature donnée, exclusivement lorsque les moyens pour déterminer un niveau d'éloignement par rapport à la station de base indiquent que le terminal mobile est éloigné de la station de base d'une distance supérieure audit seuil.

24. Terminal mobile selon la revendication 22 ou 23, dans lequel les moyens pour déterminer un niveau d'éloignement par rapport à la station de base comprennent des moyens pour estimer un paramètre au moins parmi : un niveau de puissance d'un signal reçu depuis la station de base, un profil de propagation entre le terminal mobile et la station de base, des retards de propagation entre le terminal mobile et la station de base, un niveau de puissance de signaux reçus respectivement d'un ensemble de stations de base du système de radiocommunication.

25. Terminal mobile selon l'une quelconque des revendications 22 à 24, dans lequel les moyens pour déterminer un niveau d'éloignement par rapport à la station de base comprennent :
- des moyens pour émettre, à destination de la station de base, une demande d'accès à des ressources de communication, à un instant d'émission calé par rapport à un instant respectif de réception d'un signal de synchronisation émis par la station de base ;
- des moyens pour répéter l'émission d'une demande d'accès de façon anticipée, si aucune réponse à la demande d'accès n'a été reçue au terminal mobile ;
- des moyens pour déduire que le terminal mobile est à une distance de la station de base supérieure à un seuil, si une réponse à la demande d'accès est reçue au terminal mobile à l'issue de la répétition de la demande d'accès de façon anticipée.

26. Terminal mobile selon l'une quelconque des revendications 22 à 25, dans lequel lesdits moyens pour choisir une signature parmi l'ensemble de signatures possibles pour émettre des demandes d'accès comprenant ladite signature, en fonction du niveau d'éloignement déterminé par les moyens pour déterminer un niveau d'éloignement par rapport à la station de base, sont mis en oeuvre uniquement lorsque les demandes d'accès visent à établir un appel d'urgence.

27. Station de base d'un système de radiocommunication, comprenant :
- des moyens pour émettre des signaux de synchronisation à destination de terminaux mobiles ;
- des moyens pour détecter des demandes d'accès à des ressources de communication, émises par des terminaux mobiles, dans des fenêtres de réception appartenant à un ensemble parmi au moins un premier et un second ensembles de fenêtres de réception, les demandes d'accès comprenant une signature parmi un ensemble de signatures possibles ;
dans laquelle les fenêtres de réception du premier ensemble sont calées par rapport à des instants d'émission respectifs des signaux de synchronisation, et les fenêtres de réception du second ensemble sont décalées dans le temps avec un retard par rapport aux fenêtres de réception du premier ensemble ; et dans laquelle les moyens pour détecter des demandes d'accès émises par des terminaux mobiles comprennent des moyens pour détecter des demandes d'accès comprenant au moins une signature donnée parmi l'ensemble signatures possibles dans les fenêtres de réception du second ensemble, et des moyens pour détecter des demandes d'accès comprenant une signature autre que ladite signature donnée dans les fenêtres de réception du premier ensemble.
